(19) Europäisches Patentamt
European Patent Office
Office européen des brevets

(11) **EP 3 415 874 A1**

(12) **EUROPEAN PATENT APPLICATION**

(43) Date of publication:
**19.12.2018 Bulletin 2018/51**

(51) Int Cl.:
**G01D 5/353** *(2006.01)*  **G01L 9/00** *(2006.01)*
**G01L 11/02** *(2006.01)*

(21) Application number: **17175938.4**

(22) Date of filing: **14.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **IMEC vzw**
**3001 Leuven (BE)**

(72) Inventors:
• **JANSEN, Roelof**
 **3001 Leuven (BE)**
• **ROCHUS, Veronique**
 **3001 Leuven (BE)**
• **ROTTENBERG, Xavier**
 **3001 Leuven (BE)**

(74) Representative: **AWA Sweden AB**
**P.O. Box 5117**
**200 71 Malmö (SE)**

(54) **A SENSING DEVICE, A SENSING SYSTEM AND A METHOD FOR SENSING AN EXTERNAL INFLUENCE**

(57)   A sensing device comprises: a Mach Zehnder-type interferometer device (110), comprising a reference propagation path (116) and a measurement propagation path (114), wherein a phase difference of light from the reference and measurement propagation paths provides a measurement of an external influence on an arrangement of the measurement propagation path; a first and a second light splitter (140; 142), such that light from the reference propagation path (116) and the measurement propagation path (114) is split into a first and a second reference output (148,150) and a first and a second measurement output (144, 146); a first and a second recombiner (156; 158), wherein each recombiner (156, 158; 178, 180, 182, 184) is configured to recombine light from a pair of a reference output and a measurement output; and at least one phase influencer (152, 154; 186, 188, 190, 192) for causing a phase offset between different pairs of recombined light.

Fig. 4

EP 3 415 874 A1

**Description**

<u>Technical field</u>

The present inventive concept relates to a sensing device, a sensing system and a method for sensing an external influence. In particular, the present inventive concept relates to sensing of an external influence using a Mach Zehnder-type interferometer device.

<u>Background</u>

Pressure sensors are widely used in multiple applications, such as automotive applications, medical diagnostics, altitude and depth measurements and flow sensing.

Use of opto-mechanical pressure sensors has recently become focus of increasing attention. Sensors based on opto-mechanical solutions may provide a high sensitivity in combination with a low noise level, which makes opto-mechanical pressure sensors interesting in relation to pressure sensors based on piezoelectric or capacitive technology.

An opto-mechanical pressure sensor may be based on a Mach Zehnder-type interferometer (MZI) device, wherein light is split into two paths. One of the paths, a measurement path, is subject to a pressure affecting light propagation through the path, whereas the other path, a reference path, works as a fixed reference. The light from the measurement and reference paths is then recombined and an optical intensity output from the MZI device is dependent on the phase difference of light between the two paths and, thus, on the pressure the measurement path is subject to.

The intensity of light output by the MZI device may thus be used for measuring a pressure with a high sensitivity. The intensity of light output by the MZI device is of the form

$$Intensity_{out} = Intensity_{in} * \left( cos\left( \frac{\Delta\varphi}{2} \right) \right)^2 ,$$

where $Intensity_{out}$ is the light intensity output by the MZI device, $Intensity_{in}$ is the light intensity input into the MZI device and $\Delta\varphi$ is the phase difference of light from the measurement path and the reference path. A gradient of the cosine function is very low when the phase difference is close to zero or close to a multiple of $\pi$ radians. Hence, it is desirable that the phase difference corresponds to a linear region of the cosine function, as this implies that the pressure may be determined with a high sensitivity.

MZI devices may also be used for other types of sensing applications, not necessarily sensing a pressure. Rather, any external influence acting on the measurement path may be sensed, such as any type of force, e.g. caused by a pressure differential or by a direct force. However, the relation between the output intensity of light and the phase difference may still apply making a sensor based on an MZI device differently sensitive depending on whether the phase difference corresponds to a linear region of the cosine function or not.

JP S61-239132 discloses that light inputted to an optical waveguide on a substrate is made to branch equally into two and inputted to Mach-Zehnder type interferometers. Each Mach Zehnder type interferometer may be provided with a phase shifting pad in the reference path, and also an optical waveguides protective pad for applying a pressure to be measured to the measurement path. An applied pressure is applied equally to the protective pads of the Mach Zehnder type interferometers. Also, a different phase shift may be provided to the phase shifting pads, which implies that the intensity output by the respective Mach Zehnder type interferometers is offset to each other and the linear region of the cosine function may apply to different applied pressures for the respective Mach Zehnder type interferometers. Plural optical interferometers take partial charge of plural different measuring ranges, and the measuring range is widened as a whole.

However, the setup provided in JP S61-239132 is relatively complex. Further, the different Mach Zehnder type interferometers need to be manufactured with high accuracy such that the interferometers are equally sensitive to pressure. This sets high demands on a manufacturing process. Further, thermal gradients or other variations in conditions within the device may cause different phase shifts by the measurement paths of the Mach Zehnder type interferometers, which may introduce errors in the pressure sensing.

<u>Summary</u>

It is an object of the present inventive concept to provide a sensing device with a high sensitivity throughout a sensitivity range. It is a further object of the present inventive concept to provide a high sensitivity sensing device which is reliable and has relatively lenient demands on manufacture of a Mach Zehnder type interferometer.

These and other objects of the present inventive concept are at least partly met by the invention as defined in the independent claims. Preferred embodiments are set out in the dependent claims.

According to a first aspect, there is provided a sensing device, comprising: a Mach Zehnder-type interferometer device, comprising a reference propagation path and a measurement propagation path, wherein input light is split into the reference propagation path and the measurement propagation path and then recombined, and a phase difference of the light from the reference and measurement propagation paths provides a measurement of an external influence on an arrangement of the measurement propagation path; a first light splitter and a second light splitter, such that light from the reference propagation path is split into a first and a second reference output and light from the measurement propagation path is split into a first and a second measurement output; a first recombiner and a second recombiner, wherein each recombiner is configured to recombine light from a pair of a reference output and a measurement output; and at least one phase influencer for causing a phase offset between different pairs of recombined light.

Thanks to the use of at least two pairs of outputs, and a phase offset between different pairs of recombined light, it may be ensured that output from at least one recombiner is within the linear region of the cosine function and, hence, provides a high sensitivity of the sensing device. This implies that the sensing device allows one of the outputs of the recombiners to be selected so that determination of the external influence may always be based on a substantially linear relation between the detected phase shift and the external influence.

The measurement propagation path may be arranged in numerous different manners depending on what type of external influence is to be sensed. For instance, the measurement propagation path may be arranged on a surface which is affected by a force, such that a deformation of the surface is dependent on the force. The sensing device may thus be configured to measure or determine the force. The force could be a direct or indirect force applied on the surface, or a pressure, in the form of a static pressure or a dynamic pressure, such as a sound wave.

The external influence may cause the measurement propagation path to be elongated or shortened. This could be used for sensing a stretching or compression of a material and could thus also be used for determining a thermal influence. Also, the measurement propagation path may extend between two positions and the sensing device may thus be used for determining the distance between these two positions, such as determining whether two surfaces have been moved in relation to each other. The measurement propagation path may thus partly extend through air or another material and need not be completely formed in a waveguide.

The external influence may act directly on the arrangement of the measurement propagation path, such as by a force or pressure being applied on a surface, wherein the measurement propagation path is arranged on or in the surface. The external influence may also indirectly act on the arrangement of the measurement propagation path, e.g. by causing two positions included in the measurement propagation path to be moved in relation to each other.

The external influence need not necessarily induce a change which deforms the measurement propagation path. Accoring to an alternative, the external influence may act on the measurement propagation path so as to affect propagation of light through the measurement propagation path. For instance, an effective refractive index of the measurement propagation path may be changed based on an elasto-optic effect. Hence, the external influence may cause a stress induced change of the measurement propagation path, which could be used e.g. in a temperature sensor.

The use of light splitters to split light from the measurement propagation path enables a single measurement propagation path to be used while still enabling a signal indicative of the external influence to be arranged in a linear region allowing determining the external influence or the effect of the external influence with a high sensitivity. Since the single measurement path is used for forming plural outputs, the sensing device may set lenient demands on manufacture of a Mach Zehnder-type interferometer (MZI) device.

Differences between specimens of the sensing device during manufacture (which may be especially relevant if lenient demands on the manufacture are set) could be handled by calibrating the sensing device and does not affect a functionality of having plural outputs from recombiners, with at least one providing a signal within the linear region of the cosine function.

Further, the sensing device may easily be provided with any desired number of outputs from the light splitters and corresponding number of recombiners so as to provide multiple outputs from the recombiner. Having more than two outputs from the recombiners may further enhance possibilities of at least one of the outputs being in a linear region of the cosine function. The number of outputs does not affect a structure or set-up of the measurement propagation path.

A force sensing device based on the sensing device may be used for performing a pressure measurement so as to determine an absolute pressure or a differential pressure. However, the force sensing device may alternatively provide a dynamic pressure response to be used in an accelerometer, or a microphone, or provide a sensing of force due to inertia, which may be useful in a gyroscope. The force sensing device may include a pressure-sensitive membrane which may be affected by a constant pressure or a varying pressure (such as a pressure wave) and the force sensing device may determine the pressure affecting the pressure-sensitive membrane by the measurement propagation path being arranged on or in the pressure-sensitive membrane.

It should be realized that although the term "linear region" is used herein, a cosine function may not be exactly linear at all. However, the cosine function may be very close to linear or approximately linear over a relatively large range of arguments of the cosine function, whereas for arguments around 0 and multiples of $\pi$, the function is far from linear.

According to an embodiment, each of the at least one phase influencer is configured to interact with output from the reference propagation path or each of the at least one phase influencer is configured to interact with output from the measurement propagation path. Thus, only one of light from the measurement propagation path and light from the reference propagation path may be affected by the at least one phase influencer. This may allow having accurate control of a phase shift that may be added to outputs from either the reference propagation path and the measurement propagation path in order to ensure that a desired phase offset between different pairs of recombined light is provided.

According to an embodiment, the first light splitter and the second light splitter are configured to split light into equal number of outputs. Hence, the first and second light splitters may provide pairs of outputs that may be combined in the recombiners. The light splitters may be configured to split light into two outputs, but it may also be contemplated that three or four outputs are provided. As mentioned above, if a large number of outputs are provided, it may enhance possibilities of at least one of the outputs being in a linear region of the cosine function.

According to an embodiment, a number of phase influencers is one fewer than the number of outputs from each of the light splitters. One pair of outputs recombined in a recombiner may not be associated with any phase influencer and be unaffected by any phase influencer. All other pairs may be associated with a phase influencer so as to cause a desired phase offset in relation to the unaffected pair.

According to an embodiment, a number of outputs from the first light splitter and the second light splitter is in the range 2-4. The more outputs that are provided, the smaller the signal level of each of the outputs will be. Hence, in at least some implementations, it may be advantageous not to use more than four outputs from the light splitters in order to maintain sufficiently strong signal levels of the outputs.

According to an embodiment, a phase influencer is configured to introduce a phase shift causing a phase offset between different pairs of recombined light equaling $\pi$/(number of outputs from each of the light splitters). This implies that the linear regions of the output intensity from the recombiners is evenly distributed over different phase shifts of the measurement propagation path by the external influence.

According to a second aspect, there is provided a force sensing device, comprising: a membrane, which is configured to deform upon receiving a force as the external influence; and the device according to the first aspect, wherein the measurement propagation path is arranged on or in the membrane.

Thanks to the arrangement of the measurement propagation path on or in a membrane, such as a pressure-sensitive membrane, a force sensing device may be formed for sensing a force that causes a deformation of the membrane.

According to an embodiment, the force sensing device is a micro-opto-mechanical device formed on a semiconductor substrate, wherein the membrane is supported by the substrate and comprises an exposed surface which is sensitive to an applied force.

The force sensing device may thus be formed with semiconductor manufacturing technology, such as in fabrication of complementary metal-oxide-semiconductor (CMOS) devices. This implies that the force sensing device is suitable for manufacturing in very small scale and enables the force sensing device to easily be integrated into an integrated circuit arranged on a chip.

According to a third aspect, there is provided a proximity sensing device, comprising: the device according to the first aspect, wherein the measurement propagation path is configured such that light propagates in the measurement propagation path from a first surface to a second surface and is reflected in the second surface back to the first surface; the proximity sensing device being configured to sense a distance or change in distance between the first and second surfaces as the external influence.

Thanks to the use of two surfaces in the measurement propagation path, e.g. by directing light from the first surface towards the second surface, wherein the second surface reflects light back towards the first surface, a length of the measurement propagation becomes dependent on a distance between the surfaces. The proximity sensing device may thus be used for sensing the proximity of the surfaces to each other, e.g. for determining whether a surface is moved or for placing a first surface at a desired close relation to a second surface.

Effects and features of these second and third aspects are largely analogous to those described above in connection with the first aspect. Embodiments mentioned in relation to the first aspect are largely compatible with the second and third aspects.

According to a fourth aspect, there is provided a sensing system, comprising: the sensing device according to the first aspect, a force sensing device according to the second aspect or a proximity sensing device according to the third aspect; a processing unit, which is configured to: receive a first phase shift indicating signal from the first recombiner and a second phase shift indicating signal from the second recombiner, select a signal among the first phase shift indicating signal and the second phase shift indicating signal having a value in a desired range, and determining a quantification of the external influence based on at least the selected signal.

According to a fifth aspect, there is provided a method for sensing an external influence, said method comprising: receiving a reference signal and a measurement signal, wherein the reference signal and the measurement signal are formed by a Mach Zehnder-type interferometer device, comprising a reference propagation path and a measurement propagation path, wherein input light is split into the reference propagation path to form the reference signal and the measurement propagation path to form the measurement signal, and a phase difference of the light from the reference and measurement propagation paths provides a measurement of an external influence on an arrangement of the measurement propagation path; forming a first phase shift indicating signal based on the received measurement signal and the received reference signal; forming a second phase shift indicating signal based on the received measurement signal and the received reference signal with a phase offset to the first phase shift indicating signal; selecting a signal among the first phase shift indicating signal and the second phase shift indicating signal having a value in a desired range, and determining a quantification of the external influence based on at least the selected signal.

Effects and features of these fourth and fifth aspects are largely analogous to those described above in connection with the first, second and third aspects. Embodiments mentioned in relation to the first, second and third aspects are largely compatible with the fourth and fifth aspects.

The processing unit of the system may thus receive a first and a second phase shift indicating signal and may determine a signal which is to be used for determining an external influence on the measurement propagation path. The processing unit may determine whether a phase shift indicating signal is within a linear region of the cosine function and may hence select a phase shift indicating signal based on whether the signal is within the linear region of the cosine function or not. A desired range of values may be set for each of the phase shift indicating signals so that the processing unit knows which signal to select.

If a plurality of signals is within desired ranges (e.g. within linear regions), a plurality of signals may be selected. The sensed pressure may then be determined based on the plurality of signals selected, e.g. as an average of a plurality of determined pressures, each being determined based on one of the selected signals.

According to an embodiment of the system, the processing unit is further configured to determine a relation between a value of the first phase shift indicating signal and the second phase shift indicating signal, and, in response to the determined relation between the value of the first phase shift indicating signal and the second phase shift indicating signal, determine a relation between the external influence and the selected signal.

According to an embodiment of the method, the method further comprises determining a relation between a value of the first phase shift indicating signal and the second phase shift indicating signal, and, in response to the determined relation between the value of the first phase shift indicating signal and the second phase shift indicating signal, determining a relation between the external influence and the selected signal.

A value of the selected signal may be transformed into a quantification of the external influence or an effect of the external influence on the measurement propagation path. The processing unit may e.g. use an algorithm or a table look-up for determining the quantification of the external influence based on the selected signal. However, the relation may not be the same for all values of the selected signal, which implies that use of the relation between the first phase shift indicating signal and the second phase shift indicating signal may be advantageous in determining which relation to be used for transforming the value of the selected signal to an indication of the external influence.

The processing unit may determine a pressure or another force which is applied on a surface, e.g. a surface of a membrane, in which the measurement propagation path is arranged. However, the processing unit may alternatively determine an effect caused by the external influence, such as a change in distance between two surfaces.

According to an embodiment of the system, the processing unit is configured to determine the relation between the external influence and the selected signal to correspond to an upward slope between an increase of the external influence and phase shift or a downward slope between an increase of the external influence and phase shift.

According to an embodiment of the method, the relation between the external influence and the selected signal is determined to correspond to an upward slope between an increase of the external influence and phase shift or a downward slope between an increase of the external influence and phase shift.

The relation between values of the first and second phase shift indicating signals may indicate whether an upward or downward slope of the cosine function applies to the first phase shift indicating signal and whether an upward or downward slope of the cosine function applies to the second phase shift indicating signal. This implies that it is possible to differentiate between a downward slope and an upward slope and hence that a sensitivity range of the pressure sensing system may be extended to effects of the external influence corresponding to a phase shift below $2\pi$ radians.

Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.

Fig. 1 is a schematic view of a force sensing device including a Mach Zehnder-type interferometer device.
Fig. 2a is a cross-sectional view of a membrane including an arm of the Mach Zehnder-type interferometer device, in an equilibrium state.

Fig. 2b is a cross-sectional view of the membrane with a pressure difference across the membrane.

Fig. 3 is a chart illustrating linear and non-linear regions of sensitivity of a Mach Zehnder-type interferometer device in a sensing device.

Fig. 4 is a schematic view illustrating two outputs from a Mach Zehnder-type interferometer device in a sensing device.

Fig. 5 is a chart illustrating a phase offset between the two outputs from a Mach Zehnder-type interferometer device in a sensing device.

Fig. 6 is a schematic view illustrating a plurality of outputs from a Mach Zehnder-type interferometer device in a sensing device.

Fig. 7 is a chart illustrating a pressure sensitivity range of a Mach Zehnder-type interferometer device in a pressure sensing device.

Fig. 8 is a chart illustrating pressure sensitivity range for two Mach Zehnder-type interferometer devices in a pressure sensing device.

Fig. 9 is a schematic view of a force sensing device including two Mach Zehnder-type interferometer devices.

Fig. 10 is a schematic view of a force sensing system.

Fig. 11 is a flow chart illustrating a method for sensing an external influence.

## Detailed description

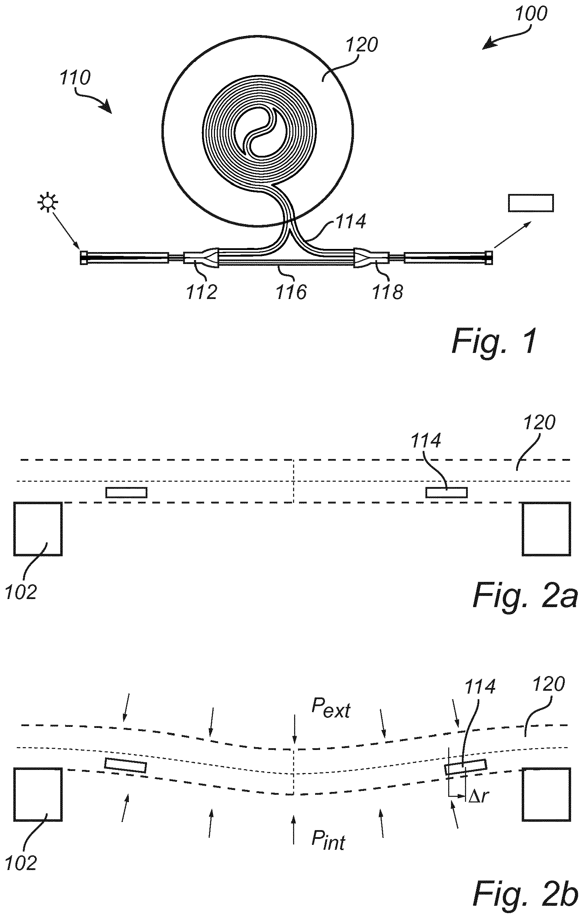

Referring now to Fig. 1, a force sensing device 100 using a Mach Zehnder-type interferometer (MZI) device 110 will first be generally described. A MZI device may be used for detecting a force based on the force causing a mechanical deflection of a membrane that induces an effect on an optical propagation path, which may be detected by the MZI device. The MZI device may be produced in a small scale so as to form a micro-opto-mechanical sensor (MOMS).

An MZI device as shown in Fig. 1 comprises an interferometric splitter 112, two waveguide arms 114, 116 and a recombiner 118. One of the MZI waveguide arms 114 is placed on a flexible pressure-sensitive membrane 120, which is subjected to a differential pressure while the other MZI waveguide arm 116 acts as a fixed reference. The MZI waveguide arm 114 placed on the membrane 120 thus forms a measurement propagation path of the MZI device 110, whereas the other MZI waveguide arm 116 forms a reference propagation path.

The optical intensity emerging from the MZI device 110 depends on the phase difference of light emerging from the arms 114, 116, and thus on the differential pressure the measurement propagation path is subjected to.

Although a force sensing device 100 will be generally described below, it should be realized that the MZI device 110 may be arranged in many other ways, depending on the sensing application, such that an external influence affecting the measurement propagation path 114 may be sensed.

For instance, the measurement propagation path 114 may be arranged on a surface which is affected by a force, such that a deformation of the surface is dependent on the force. The sensing device may thus be a force sensing device 100 configured to measure or determine the force. This is particularly explained below for a pressure sensing device, but the force could be a direct or indirect force applied on the surface, or a pressure, in the form of a static pressure or a dynamic pressure, such as a sound wave.

The external influence may cause the measurement propagation path to be elongated or shortened. This could be used for sensing a stretching or compression of a material, which may be used for determining a thermal influence and, hence, for determining a temperature.

Also, the measurement propagation path 114 may extend between two positions and the sensing device may thus be used for determining the distance between these two positions, such as determining whether two surfaces have been moved in relation to each other. The measurement propagation path 114 may thus partly extend through air or another material and need not be completely formed in a waveguide. The measurement propagation path 114 may include a first grating coupler, which directs light from the first surface towards the second surface. The light may then be reflected by the second surface, which is close to the first surface, and may be coupled back into a second grating coupler of the measurement propagation path 114.

The external influence may act directly on the arrangement of the measurement propagation path 114, such as by a force or pressure being applied on a surface, wherein the measurement propagation path 114 is arranged on or in the surface. The external influence may also indirectly act on the arrangement of the measurement propagation path 114, e.g. by causing two positions included in the measurement propagation path 114 to be moved in relation to each other.

The external influence need not necessarily induce a change which deforms the measurement propagation path. Accoring to an alternative, the external influence may act on the measurement propagation path 114 so as to affect propagation of light through the measurement propagation path 114. For instance, an effective refractive index of the measurement propagation path 114 may be changed based on an elasto-optic effect. Hence, the external influence may cause a stress induced change of the measurement propagation path 114, which could be used e.g. in a temperature sensor.

The external influence could also act to both affect a length of the measurement propagation path 114 and the effective refractive index. Depending on the external influence to be sensed, the measurement propagation path 114 may be designed such that the induced change of the measurement propagation path 114 may be correctly correlated to a quantification of the external influence. Thus, in some embodiments, the measurement propagation path 114 may be designed such that a change in the effective refractive index may be negligible compared to the change in length of the measurement propagation path 114. In other embodiments, the change in effective refractive index may be used for determining a quantification of the external influence. In yet other embodiments, a combination of change of length of the measurement propagation path 114 and a change in the effective refractive index may be used for determining a quantification of the external influence.

In Fig. 2a, a cross-section of the MOMS is shown, illustrating the membrane 120 including the MZI arm 114.

The MOMS may be manufactured using semiconductor manufacturing technology, such as in fabrication of complementary metal-oxide-semiconductor (CMOS) devices. This implies that the force sensing device is suitable for manufacturing in very small scale and enables the force sensing device to easily be integrated into an integrated circuit arranged on a chip.

The MOMS may be formed on silicon substrate 102. A thin layer of membrane material may first be deposited on the silicon substrate 102. For instance, the membrane material may be silicon dioxide. The waveguide of the MZI arm 114 may be patterned in a very thin layer, e.g. of silicon nitride, applied on the silicon dioxide. Then, a top cladding of membrane material may be added on top of the MZI arm 114 and the first layer of membrane material. In order to release the sensing membrane, the silicon substrate 102 beneath the membrane material may be removed. For instance, a Deep Reacting Ion Etching (DRIE) for the backside etch may be performed to remove the silicon. Hence, the MZI arm 114 may be arranged inside the pressure-sensitive membrane 120. However, it should be realized that the MZI arm 114 may instead be arranged on an upper surface or a lower surface of the pressure-sensitive membrane 120.

As schematically indicated in Fig. 2b, when a pressure difference between an upper surface and a lower surface of the membrane 120 prevails, the membrane 120 is deflecting. Then, the position of the MZI arm 114 is changed which induces an elongation of the optical path of the measurement propagation path, hence inducing a phase shift in MZI arm 114.

The output intensity $I_{out}$ of the MZI device 110 may be evaluated by the following expression:

$$I_{out} = I_{ref} + I_{sens} + 2\sqrt{I_{ref}I_{sens}}cos(\Delta\varphi),$$

where $I_{ref}$ and $I_{sens}$ are the light intensity of the reference propagation path and the light intensity of the measurement propagation path, respectively. The light intensity of the measurement propagation path can be slightly smaller due to additional losses in the waveguide, e.g. because of distortion of the shape of the waveguide. The phase difference $\Delta\varphi$ between the two MZI arms 114, 116 is proportional to the deflection of the membrane 120 caused by a pressure difference $\Delta P$ across the membrane and can be expressed as:

$$\Delta\varphi = \frac{\pi\Delta P}{\Delta P_{range}},$$

with the pressure range $\Delta P_{range}$ being dependent on a shape and placement of the MZI arm 114 on the membrane.

For a circular shaped MZI arm 114 (or a spiral with a single loop) in the membrane 120, the pressure range $\Delta P_{range}$ may be expressed as:

$$\Delta P_{range} = \frac{\lambda_0}{4\pi n_{eff}} \frac{16D + hR^2\sigma_0}{Z_{wg}R_{wg}(R^2 - R_{wg}^2)}.$$

For a spiral-shaped MZI arm 114 with $N$ loops, the pressure range $\Delta P_{range}$ may be expressed as:

$$\Delta P_{range} = \frac{\lambda_0}{4\pi n_{eff}} \frac{16D + hR^2\sigma_0}{Z_{wg}\sum_{i=1}^{N} R_{wg,i}(R^2 - R_{wg,i}^2)},$$

where $\sigma_0$ is residual stress in the membrane 120, $D$ is flexural rigidity of the membrane 120, $h$ is a thickness of the membrane 120, $R$ is a radius of a circular membrane 120, $R_{wg,i}$ is a position of loop $i$ in a radial direction of the membrane 120 and $Z_{wg}$ is a position of the arm 114 in a thickness direction of the membrane, $\lambda_0$ is a wavelength of light propagated in the MZI device 110 and $n_{eff}$ is an effective refractive index of the waveguide.

A maximal sensitivity $S$ of the MZI device 110 is influenced by the pressure range and losses in the waveguide and may be expressed as.

$$S = \frac{\partial \bar{I}_{out}/\partial I_{in}}{\partial P} = \frac{2\sqrt{\bar{I}_{ref}I_{sens}}}{I_{in}} \frac{\bar{\pi}}{\Delta P_{range}}.$$

Increasing the number of loops in the spiral, decreases the pressure range and increases the sensitivity.

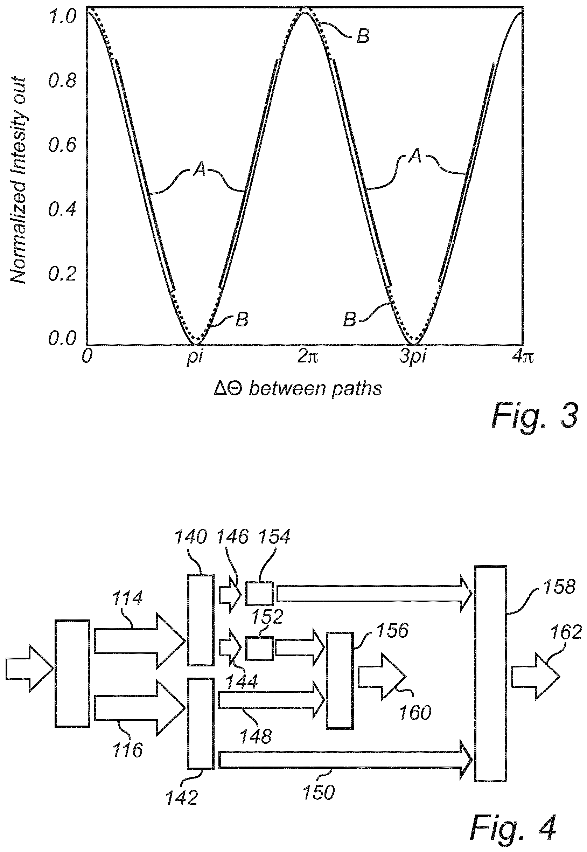

As illustrated in Fig. 3, output from a MZI device 110 may include a highly sensitive region (indicated by solid lines A) and less sensitive regions (indicated by dashed lines B). In the highly sensitive region, there is a linear or substantially linear relation between the output intensity of the MZI device 110 and the external influence, in this case the pressure difference $\Delta P$ over the membrane 120. Thus, if an output from the MZI device 110 is in this highly sensitive region, the pressure difference $\Delta P$ can be very accurately determined. However, if the argument of the cosine function, i.e. the phase difference $\Delta\varphi$ between the two MZI arms 114, 116 is close to 0 or a multiple of $\pi$, the output from the MZI device 110 will be in a non-linear region where a change in the pressure difference $\Delta P$ has a small effect on the output from the MZI device 110. Thus, in the non-linear region, the pressure difference $\Delta P$ may not be very accurately determined.

Referring now to Fig. 4, a solution to ensuring that an output in the linear region is provided will be described. As shown in Fig. 4, light from the measurement propagation path of the MZI arm 114 may be input into a first light splitter 140. Further, light from the reference propagation path of the MZI arm 116 may be input into a second light splitter 142.

Each of the light splitters 140, 142 may split the input light into a first and a second output. Thus, a first measurement output 144 and a second measurement output 146 is provided and a first reference output 148 and a second reference output 150 is provided.

Further, first and second phase influencers 152 and 154 are configured to interact with the first and second measurement outputs 144, 146. The first and second phase influencers 152, 154 could alternatively be configured to interact with the first and second reference outputs 148, 150.

The first and second phase influencers 152, 154 may each be configured to provide a fixed phase offset to the signal affected by the phase influencer 152, 154. The phase offset provided by the first phase influencer 152 is different from the phase offset provided by the second phase influencer 154.

In one embodiment, one of the phase influencers 152 provides no phase offset at all. This could correspond to the device 100 not including any phase influencer in relation to the output. Thus, even though two phase influencers 152, 154 are illustrated in Fig. 4, only one may actually be provided in the device 100.

The device 100 may further comprise a first recombiner 156 and a second recombiner 158. The first recombiner 156 receives the first measurement output 144 (having passed the first phase influencer 152) and the first reference output 148. The first recombiner 156 is configured to recombine light from the pair of reference and measurement outputs and hence form a first output 160 of the MZI device 110. The second recombiner 158 receives the second measurement output 146 (having passed the second phase influencer 154) and the second reference output 150. The second recombiner 158 is configured to recombine light from the pair of reference and measurement outputs and hence form a second output 162 of the MZI device 110.

As a further alternative, the first and second phase influencers 152, 154 could be configured such that one phase influencer interacts with a reference output and another phase influencer interacts with a measurement output, wherein each of the first and the second recombiner 156, 158 is configured to receive an output that has passed a phase influencer.

Thanks to the phase influencers 152, 154 being configured to interact with the outputs from the light splitters 140, 142, the MZI device 110 may output a plurality of signals, one from each recombiner 156, 158, wherein the outputs 160, 162 have a phase offset in relation to each other.

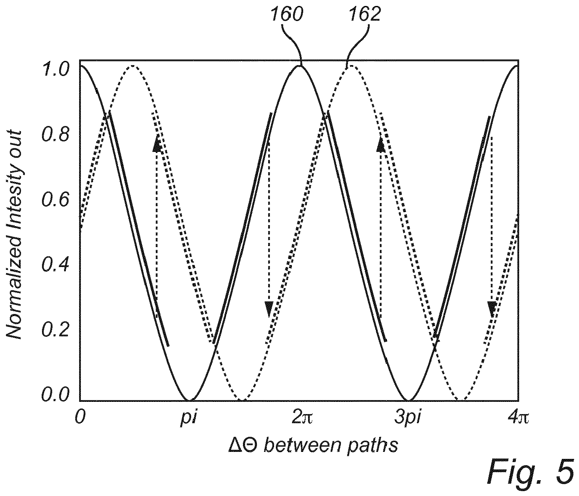

As shown in Fig. 5, a first output 160 and a second output 162 may thus be shifted in relation to each other, such that the linear regions of the outputs are associated with different intervals of levels of external influence, in this case pressure intervals. Hence, regardless of which pressure difference $\Delta P$ is provided across the membrane 120, an output is provided that may be used for determining the pressure difference $\Delta P$ with high accuracy.

The first output 160 may be associated with a phase influencer 152 providing a 0 phase offset (or the first output 160 may not be associated with any phase influencer). The second output 162 may be associated with a phase influencer 154 providing a phase offset of $\pi/2$. This implies that the linear regions of the outputs 160, 162 are evenly distributed for different pressure differences, ensuring that the outputs 160, 162 together always provide a linear region relating the output signal to the pressure difference $\Delta P$ across the membrane 120.

Furthermore, a relation between the first and the second output 160, 162 may be used for determining a relation between the output and a pressure difference $\Delta P$ such that a pressure interval associated with the output may be determined.

As shown in Fig. 5, if a value of the second output 162 is larger than a value of the first output 160, it may be concluded that a downward slope relation between the pressure difference $\Delta P$ and the output signal applies (i.e. the larger the pressure difference $\Delta P$, the smaller the value of the output signal), whereas if a value of the second output 162 is smaller than a value of the first output 160, it may be concluded that an upward slope relation between the pressure difference $\Delta P$ and the output signal applies. This fact may be used for increasing a pressure range $\Delta P_{range}$ in which the MZI device 110 may be sensitive, as it may now be differentiated between phase shifts up to $2\pi$.

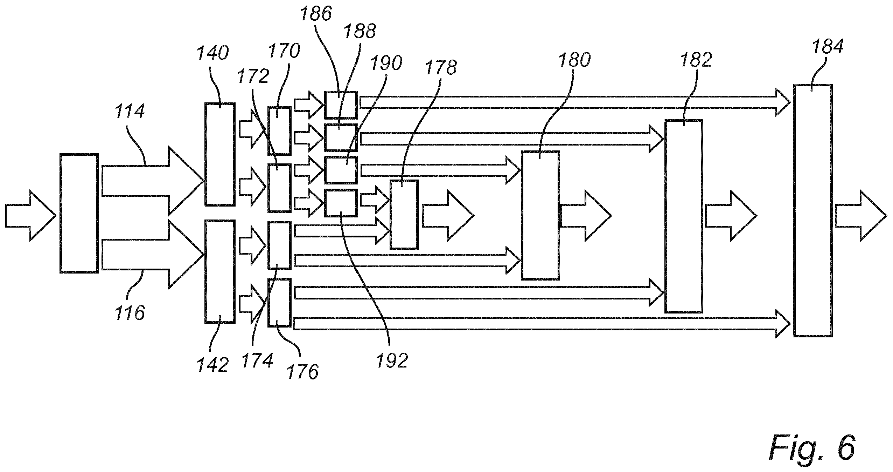

As illustrated in Fig. 6, the output from the measurement propagation path and the reference propagation path may alternatively be split into further outputs. In Fig. 6, further light splitters 170, 172, 174, 176 are disclosed, wherein each of the further light splitters 170, 172, 174, 176 is configured to split an output from one of the first and second light splitters 140, 142 in two. However, it should be realized that the first and second light splitters 140, 142 may instead be configured to split light into more than two outputs. Also, the light splitters 140, 170, 172 may be considered to together form a first light splitter for splitting light from the measurement propagation path and the light splitters 142, 174, 176 may be considered to together form a second light splitter for splitting light from the reference propagation path.

The MZI device 110 now includes four recombiners 178, 180, 182, 184 for generating four different outputs. The outputs may have a phase offset in relation to each other. In this case, the phase offset may be $\pi/4$ between the outputs so that the linear regions of the outputs are evenly distributed for different pressure differences.

The phase influencers 186, 188, 190, 192 may thus be configured to provide fixed phase offsets of 0, $\pi/4$, $\pi/2$, and $3\pi/4$. The phase influencer providing a 0 phase offset may be omitted.

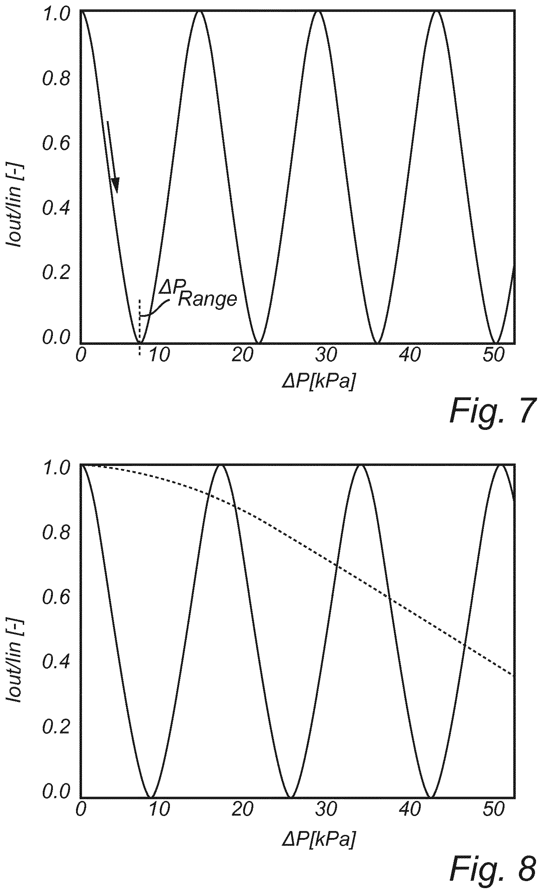

As illustrated in Fig. 7, having a highly sensitive MZI device 110 allows determining a pressure difference $\Delta P$ across the membrane 120 with high accuracy (as a very small change in the pressure difference $\Delta P$ implies a large change in output light intensity from the MZI device 110). However, the highly sensitive MZI device 110 can only determine a pressure difference $\Delta P$ within a small pressure range $\Delta P_{range}$. As soon as the phase difference $\Delta\varphi$ becomes larger than $\pi$, it is not possible to differentiate pressure difference $\Delta P$ causing a phase shift below $\pi$ from pressure difference $\Delta P$ causing a phase shift above $\pi$. Hence, the MZI device 110 may only determine pressure differences $\Delta P$ up to a limit given by $\Delta P_{range}$ or $2*\Delta P_{range}$ using the relation between plural outputs of the MZI device 110 as described above.

Referring now to Fig. 8, the force sensing device 100 may be provided with two MZI devices 110, 130. The two MZI devices 110, 130 may have different sensitivity to a force on the membrane 120, such as the pressure difference $\Delta P$ over the membrane 120. As illustrated in Fig. 8 by the solid line, one of the MZI devices may be a highly sensitive MZI device 110 that has a high sensitivity to the pressure difference $\Delta P$ within a small pressure range $\Delta P_{range}$. The other MZI device, illustrated by a dashed line, may be a broad range MZI device 130 that has a low sensitivity to the pressure difference $\Delta P$ within a broad pressure range $\Delta P_{range}$.

The pressure difference $\Delta P$ coarsely determined by the broad range MZI device 130 may thus allow determining a pressure interval that applies to the highly sensitive MZI device 110. Thus, it is possible to differentiate between different parts of the periodic curve of the highly sensitive MZI device 110 so that a measurement range of the pressure sensing device 100 is significantly increased, while maintaining a high sensitivity of the pressure sensing device 100.

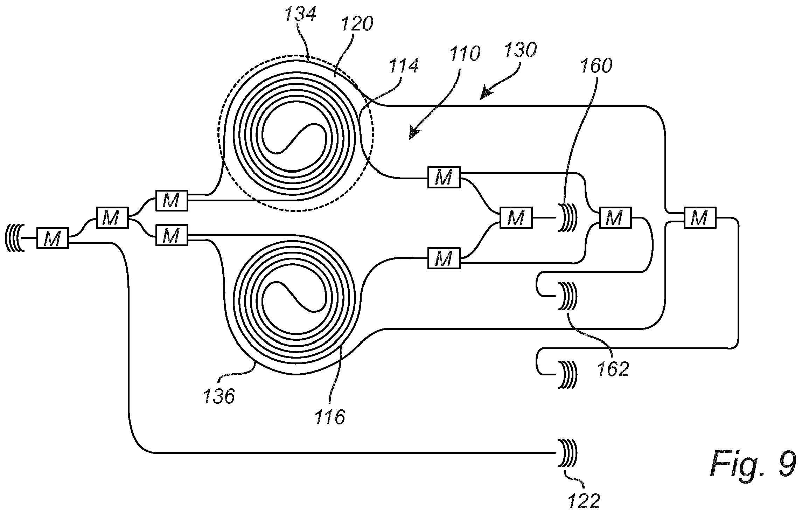

Referring now to Fig. 9, the two MZI devices 110, 130 may be arranged such that the MZI arms 114, 134 forming the measurement propagation paths of the MZI devices 110, 130 are arranged on or in the same membrane 120. This implies that the two MZI devices 110, 130 are subject to the same force, such as the pressure difference over the membrane 120, and the measurements performed by the MZI devices 110, 130 are thus related to each other.

As discussed above, the two MZI devices 110, 130 may be differently sensitive to the applied force, such as the pressure difference $\Delta P$ over the membrane 120. This may be achieved in several different manners, wherein one or more properties of the MZI arms 114, 134 of the MZI devices 110, 130 differ.

As shown in Fig. 9, a first MZI device 110 may have an arm 114 being spiral-shaped forming several loops. This implies that the first MZI device 110 may form a highly sensitive MZI device. A second MZI device 130 may have an arm 134 arranged as a single loop around the spiral shape of the first MZI device 110. The second MZI device 130 thus has a significantly lower sensitivity than the first MZI device 110, but within a significantly broader pressure range $\Delta P_{range}$.

The arrangement illustrated in Fig. 9 allows the arms 114, 134 to be arranged in the same plane and close to each other without intersecting each other so as to enable arrangement of the measurement propagation paths on or in a small-size membrane 120. The arms 114, 134 may be arranged in the same plane perpendicular to a thickness direction of the membrane 120, which implies that the arms 114, 134 may be simultaneously formed during manufacturing of the force sensing device 100, so as to facilitate manufacturing of the force sensing device 100.

It should be realized that the arms 114, 134 may differ in many different ways. For instance, the arm 114 of the highly sensitive MZI device 110 may be longer than the arm 134 of the broad range MZI device 130, e.g. thanks to the forming of more loops in the spiral-shape, but the longer length of the arm 114 compared to the arm 134 may be achieved in numerous different ways.

Further, the arms 114, 134 may differ in that the arms 114, 134 may be differently arranged in relation to a radial direction of the membrane 120, so that the arms 114, 134 are at different distances from a center of the membrane 120. The closer to the center of the membrane 120 the arm is arranged, the more sensitive the MZI device will be. Thus, the highly sensitive MZI device 110 may be arranged closer to the center of the membrane 120 than the broad range MZI device 130.

Further, the arms 114, 134 may differ in that the arms 114, 134 may be differently arranged in relation to a thickness direction of the membrane 120. A surface of the membrane may be affected to a larger extent by an applied force than a position in a middle of the thickness of the membrane. Thus, the highly sensitive MZI device 110 may be arranged closer to the surface of the membrane 120 (or on the surface of the membrane 120) than the broad range MZI device 130.

As further illustrated in Fig. 9, the reference arms 116, 136 of the MZI devices 110, 130 may have the same shape and length as the measurement arms 114, 134.

This implies that the MZI devices 110, 130 are balanced and may be relatively insensitive to a spectral bandwidth of light input to the MZI device. An unbalanced MZI device on the other hand may provide a modulated output based on the path length difference of the MZI arms. The modulated output implies that an output intensity is decreased, which may imply that the MZI device may be drastically affected by a spectral bandwidth of the input light to the MZI device. Although balanced MZI devices 110, 130 may thus be preferred, it should be realized that it is not necessary to use balance MZI devices 110, 130, e.g. if the spectral bandwidth of input light is very small, such as by using a very high quality laser.

Due to quantum noise and variation of the laser cavity, the output of the laser always contains some noise. Two types can be identified here, intensity noise and wavelength drift. The wavelength drift can be reduced by adding filter at the input of the circuit, before entering light into the interferometric splitter 112 such as, for instance, a ring resonator. The intensity noise can be corrected by adding a power tap 122, such that it is possible to subtract the intensity noise directly from the signal.

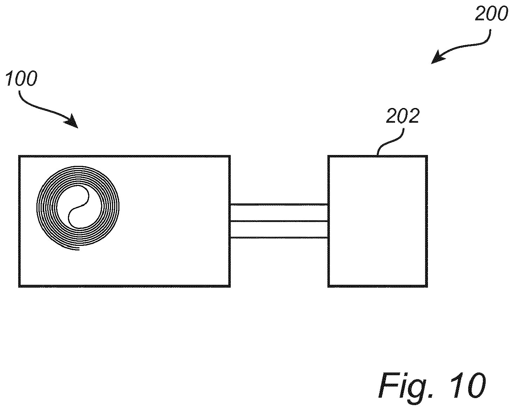

Referring now to Fig. 10, the sensing device 100 may be integrated in a sensing system 200. The sensing system 200 may include a processing unit 202, which may be arranged to receive outputs from the MZI devices 110,130.

The processing unit 202 may be a central processing unit (CPU). The processing unit 202 may alternatively be a special-purpose circuitry for providing only specific logical operations. Thus, the processing unit 202 may be provided in the form of an application-specific integrated circuit (ASIC), an application-specific instruction-set processor (ASIP) or a field-programmable gate array. The processing unit 202 may be configured to determine an external influence based on the received outputs.

The processing unit 202 may be connected to outputs from the MZI devices 110, 130 through a wired or wireless connection. The processing unit 202 may thus be arranged integrated with the sensing device 100. However, alternatively, the processing unit 202 may be remotely arranged, wherein the outputs from the MZI devices 110, 130 may be transmitted to the processing unit 202 through wireless communication.

As discussed above, the MZI device 110 may provide a plurality of outputs so that at least one output is in a linear region of a relation between a value of the output and the external influence. The processing unit 202 may thus receive a first phase shift indicating signal form the first recombiner 156 and a second phase shift indicating signal from the second recombiner 158.

The processing unit 202 may then select a signal among the first phase shift indicating signal and the second phase shift indicating signal having a value in a linear region. The processing unit 202 may thus determine that the external influence is to be based on the selected signal.

The processing unit 202 may further compare the value of the first phase shift indicating signal to the value of the second phase shift indicating signal. By means of the comparison, the processing unit 202 may determine a relation between the external influence and the selected signal. In particular, it may be concluded whether a downward slope relation between the external influence and the output signal applies or an upward slope relation between the external influence and the output signal applies. In this manner, the processing unit 202 may use a correct relation between the external influence and the selected signal for determining a quantification of the external influence based on the selected signal.

The processing unit 202 may e.g. comprise algorithms or a look-up tables for correlating values of the first and second phase shift indicating signals to the external influence, such as pressure differences $\Delta P$ across the membrane 120. The algorithm or look-up tables may include information based on calibration of the sensing device 100, e.g. in association with manufacturing of the sensing device 100.

The processing unit 202 may further receive a third phase shift indicating signal from the second MZI device 130. The first and second phase shift indicating signals may be highly sensitive to the external influence and provided by a highly sensitive MZI device 110, whereas the third phase shift indicating signal may be less sensitive to the external influence and provided by a broad range MZI device 130.

The processing unit 202 may first coarsely determine a quantification of the external influence based on the third phase shift indicating signal. This coarse determination may be used to indicate an interval that applies to the first phase shift indicating signal and/or the second phase shift indicating signal of the highly sensitive MZI device 110. The processing unit 202 may then accurately determine a quantification of the external influence, such as the pressure difference $\Delta P$, based on the selected first or second phase shift indicating signal. The pressure interval provided by the broad range MZI device 130 may give an indication which of the first or second phase shift indicating signals is within a linear region and the signal may thus be selected directly based on the coarse pressure determination based on the third phase shift indicating signal.

The processing unit 202 may output the determined quantification of the external influence to another processing unit (or another process being executed on the same processing unit), or for presentation on a display. The output determined quantification of the external influence may then be used in any type of sensing application, such as a pressure sensing application in automotive applications, medical diagnostics, altitude and depth measurements and flow sensing.

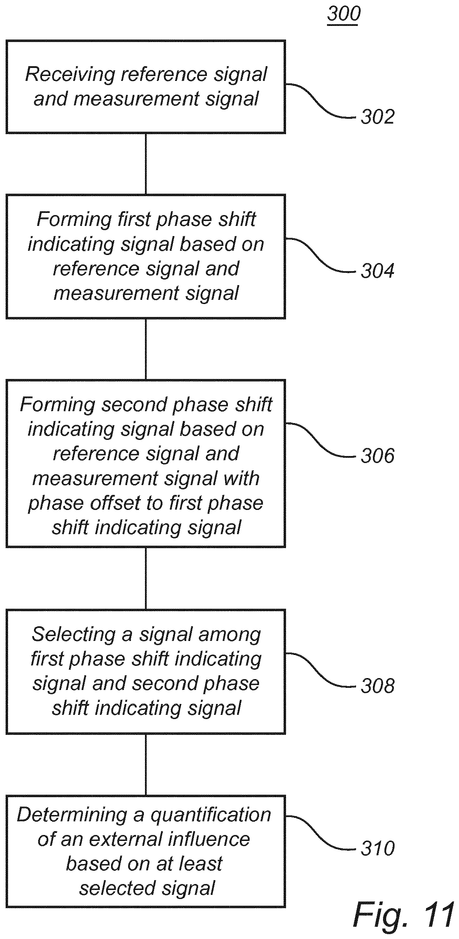

Referring now to Fig. 11, a method 300 for sensing an external influence will be briefly summarized. The method comprises receiving 302 a reference signal from a reference propagation path of an MZI device 110 and a measurement signal from a measurement propagation path of the MZI device 110.

The method further comprises forming 304 a first phase shift indicating signal based on the received measurement signal and the received reference signal and forming 306 a second phase shift indicating signal based on the received measurement signal and the received reference signal with a phase offset to the first phase shift indicating signal.

The phase offset between the first phase shift indicating signal and the second phase shift indicating signal may be provided by splitting each of the measurement signal and the reference signal in two and providing a phase offset to at least one of the split signals before pairs of a measurement signals and a reference signal are recombined.

The method further comprises selecting 308 a signal among the first phase shift indicating signal and the second phase shift indicating signal having a value in a desired range. The selected signal could thus be in a linear region being highly sensitive to a change in an effect of the external influence, such as a pressure difference $\Delta P$ across a membrane 120, of the sensing device 100.

The method further comprises determining 310 a quantification of the external influence based on at least the selected signal.

In the above the inventive concept has mainly been described with reference to a limited number of examples. However, as is readily appreciated by a person skilled in the art, other examples than the ones disclosed above are equally possible within the scope of the inventive concept, as defined by the appended claims.

For example, it should be realized that the use of plural outputs from a MZI device 110 in order to ensure that at least one output is in a linear region may be used without having more than one MZI device 110 arranged on the membrane 120.

However, the use of plural outputs may alternatively be applied to both MZI devices 110, 130 for improving sensitivity of both MZI devices 110, 130 arranged on the membrane 120.

Further, the first and second MZI devices 110, 130 may be differently sensitive to an external influence, such as a pressure difference $\Delta P$ across the membrane 120, but each of the signals from the first and the second MZI devices 110, 130 may be individually used for determining the external influence, such as pressure difference $\Delta P$. The first and second MZI devices 110, 130 may thus provide different pressure ranges and the force sensing device 100 may thus be configured for determining the pressure difference $\Delta P$ in a broad range but with different sensitivity in different parts of the range.

**Claims**

1. A sensing device, comprising:

   a Mach Zehnder-type interferometer device (110), comprising a reference propagation path (116) and a measurement propagation path (114), wherein input light is split into the reference propagation path (116) and the measurement propagation path (114) and then recombined, and a phase difference of the light from the reference and measurement propagation paths provides a measurement of an external influence on an arrangement of the measurement propagation path;

   a first light splitter (140) and a second light splitter (142), such that light from the reference propagation path (116) is split into a first and a second reference output (148,150) and light from the measurement propagation path (114) is split into a first and a second measurement output (144, 146);

   a first recombiner (156) and a second recombiner (158), wherein each recombiner (156, 158; 178, 180, 182, 184) is configured to recombine light from a pair of a reference output and a measurement output; and
at least one phase influencer (152, 154; 186, 188, 190, 192) for causing a phase offset between different pairs of recombined light.

2. The sensing device according to claim 1, wherein each of the at least one phase influencer (152, 154; 186, 188, 190, 192) is configured to interact with output from the reference propagation path (116) or each of the at least one phase influencer (152, 154; 186, 188, 190, 192) is configured to interact with output from the measurement propagation path (114).

3. The sensing device according to any one of the preceding claims,
wherein the first light splitter (140) and the second light splitter (142) are configured to split light into equal number of outputs.

4. The sensing device according to claim 3, wherein a number of phase influencers (152, 154; 186, 188, 190, 192) is one fewer than the number of outputs from each of the light splitters (140, 142).

5. The sensing device according to claim 3 or 4, wherein a number of outputs from the first light splitter (140) and the second light splitter (142) is in the range 2-4.

6. The sensing device according to any one of claims 3-5, wherein a phase influencer (152, 154; 186, 188, 190, 192) is configured to introduce a phase shift causing a phase offset between different pairs of recombined light equaling $\pi$/(number of outputs from each of the light splitters).

7. A force sensing device, comprising:

   a membrane (120), which is configured to deform upon receiving a force as the external influence;
   the device according to any one of the preceding claims, wherein the measurement propagation path (114) is arranged on or in the membrane (120).

8. The force sensing device according to claim 7, wherein the force sensing device (100) is a micro-opto-mechanical device formed on a semiconductor substrate (102), wherein the membrane (120) is supported by the substrate (102) and comprises an exposed surface which is sensitive to an applied force.

9. A proximity sensing device, comprising:

   the device according to any one of claims 1-6, wherein the measurement propagation path (114) is configured such that light propagates in the measurement propagation path (114) from a first surface to a second surface and is reflected in the second surface back to the first surface;
   the proximity sensing device being configured to sense a distance or change in distance between the first and second surfaces as the external influence.

10. A sensing system, comprising:

    the sensing device (100) according to any one of claims 1-6, the force sensing device according to any one of claims 7-8 or the proximity sensing device according to claim 9;
    a processing unit (202), which is configured to:

    receive a first phase shift indicating signal from the first recombiner (156) and a second phase shift indicating signal from the second recombiner (158),
    select a signal among the first phase shift indicating signal and the second phase shift indicating signal having a value in a desired range, and
    determining a quantification of the external influence based on at least the selected signal.

11. The sensing system according to claim 10, wherein the processing unit (202) is further configured to determine a relation between a value of the first phase shift indicating signal and the second phase shift indicating signal, and, in response to the determined relation between the value of the first phase shift indicating signal and the second phase shift indicating signal, determine a relation between the external influence and the selected signal.

**12.** The sensing system according to claim 11, wherein the processing unit (202) is configured to determine the relation between the external influence and the selected signal to correspond to an upward slope between an increase of the external influence and phase shift or a downward slope between an increase of the external influence and phase shift.

**13.** A method for sensing an external influence, said method comprising:

receiving (302) a reference signal and a measurement signal, wherein the reference signal and the measurement signal are formed by a Mach Zehnder-type interferometer device (110), comprising a reference propagation path (116) and a measurement propagation path (114), wherein input light is split into the reference propagation path (116) to form the reference signal and the measurement propagation path (114) to form the measurement signal, and a phase difference of the light from the reference and measurement propagation paths provides a measurement of an external influence on an arrangement of the measurement propagation path (114);

forming (304) a first phase shift indicating signal based on the received measurement signal and the received reference signal;

forming (306) a second phase shift indicating signal based on the received measurement signal and the received reference signal with a phase offset to the first phase shift indicating signal;

selecting (308) a signal among the first phase shift indicating signal and the second phase shift indicating signal having a value in a desired range, and

determining (310) a quantification of the external influence based on at least the selected signal.

**14.** The method according to claim 13, further comprising determining a relation between a value of the first phase shift indicating signal and the second phase shift indicating signal, and, in response to the determined relation between the value of the first phase shift indicating signal and the second phase shift indicating signal, determining a relation between the external influence and the selected signal.

**15.** The method according to claim 14, wherein the relation between the external influence and the selected signal is determined to correspond to an upward slope between an increase of the external influence and phase shift or a downward slope between an increase of the external influence and phase shift.

Fig. 1

Fig. 2a

Fig. 2b

Fig. 3

Fig. 4

Fig. 5

Fig. 6

Fig. 7

Fig. 8

Fig. 9

*Fig. 10*

_300_

```
┌─────────────────────────┐
│   Receiving reference signal   │
│   and measurement signal        │ ── 302
└─────────────────────────┘
            │
┌─────────────────────────┐
│    Forming first phase shift    │
│   indicating signal based on    │
│      reference signal and       │ ── 304
│      measurement signal         │
└─────────────────────────┘
            │
┌─────────────────────────┐
│  Forming second phase shift     │
│   indicating signal based on    │
│      reference signal and       │
│  measurement signal with        │ ── 306
│   phase offset to first phase   │
│     shift indicating signal     │
└─────────────────────────┘
            │
┌─────────────────────────┐
│    Selecting a signal among     │
│   first phase shift indicating  │
│   signal and second phase       │ ── 308
│     shift indicating signal     │
└─────────────────────────┘
            │
┌─────────────────────────┐
│  Determining a quantification   │
│   of an external influence      │ ── 310
│       based on at least         │
│        selected signal          │
└─────────────────────────┘
```

_Fig. 11_

Europäisches
Patentamt

European
Patent Office

Office européen
des brevets

# EUROPEAN SEARCH REPORT

Application Number

EP 17 17 5938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AT 392 537 B (TABARELLI WERNER [LI]) 25 April 1991 (1991-04-25) | 1-6,9-15 | INV. G01D5/353 |
| Y | * page 1, line 1 - line 9 * <br> * page 3, line 54 - page 4, line 46; figure 1 * <br> * page 6, line 20 - line 54; figure 3 * | 7,8 | G01L9/00 <br> G01L11/02 |
| X | D. STOWE ET AL: "Demodulation of interferometric sensors using a fiber-optic passive quadrature demodulator", JOURNAL OF LIGHTWAVE TECHNOLOGY., vol. 1, no. 3, 3 September 1983 (1983-09-03), pages 519-523, XP055434910, US ISSN: 0733-8724, DOI: 10.1109/JLT.1983.1072135 | 1-6,9-15 | |
| Y | * Sections I - III; figure 2 * | 7,8 | |
| Y | US 2006/023988 A1 (KURTZ ANTHONY D [US] ET AL) 2 February 2006 (2006-02-02) * paragraph [0009] - paragraph [0010]; figure 1 * * paragraph [0018] - paragraph [0019]; figure 2 * | 7,8 | TECHNICAL FIELDS SEARCHED (IPC) <br><br> G01D <br> G01L |

The present search report has been drawn up for all claims

| Place of search | Date of completion of the search | Examiner |
|---|---|---|
| Munich | 15 December 2017 | Petelski, Torsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 415 874 A1

## ANNEX TO THE EUROPEAN SEARCH REPORT
## ON EUROPEAN PATENT APPLICATION NO.

EP 17 17 5938

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2017

| Patent document cited in search report | | Publication date | Patent family member(s) | | Publication date |
|---|---|---|---|---|---|
| AT 392537 | B | 25-04-1991 | AT 392537 B | | 25-04-1991 |
| | | | EP 0422143 A1 | | 17-04-1991 |
| | | | JP H03504768 A | | 17-10-1991 |
| | | | WO 9011484 A1 | | 04-10-1990 |
| US 2006023988 | A1 | 02-02-2006 | US 2006023988 A1 | | 02-02-2006 |
| | | | US 2008175529 A1 | | 24-07-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61239132 A